**Europäisches Patentamt**

**European Patent Office**

**Office européen des brevets**

(19)

(11) Veröffentlichungsnummer : **0 337 936 B1**

(12)

# EUROPÄISCHE PATENTSCHRIFT

(45) Veröffentlichungstag der Patentschrift :
**16.12.92 Patentblatt 92/51**

(51) Int. Cl.$^5$ : **G05D 16/06,** B01D 35/14,
B01D 35/04, E03C 1/02

(21) Anmeldenummer : **89810180.3**

(22) Anmeldetag : **08.03.89**

(54) **Hauswasserstation.**

(30) Priorität : **15.04.88 DE 3812522**

(43) Veröffentlichungstag der Anmeldung :
**18.10.89 Patentblatt 89/42**

(45) Bekanntmachung des Hinweises auf die
Patenterteilung :
**16.12.92 Patentblatt 92/51**

(84) Benannte Vertragsstaaten :
**AT BE CH DE ES FR GB GR IT LI LU NL SE**

(56) Entgegenhaltungen :
**FR-A- 2 261 563**
**US-A- 3 625 247**
**US-A- 3 695 449**

(73) Patentinhaber : **Schenk, Rudolf**
**Alte Distelbergstrasse 5**
**CH-5035 Unterentfelden (CH)**

(72) Erfinder : **Schlaginhaufen, Arthur**
**Hofackerweg 2**
**CH-4852 Rothrist (CH)**

(74) Vertreter : **Rottmann, Maximilian R.**
**c/o Rottmann, Zimmermann + Partner AG**
**Glattalstrasse 37**
**CH-8052 Zürich (CH)**

EP 0 337 936 B1

Jouve, 18, rue Saint-Denis, 75001 PARIS

## Beschreibung

Die vorliegende Erfindung bezieht sich auf eine Hauswasserstation nach dem Oberbegriff des Patentanspruchs 1.

Solche Hauswasserstationen werden üblicherweise zwischen eine ins Haus führende Frischwasserleitung und eine innerhalb des Hauses vorhandene Hauptwasserleitung geschaltet und haben im wesentlichen zwei Aufgaben zu erfüllen:

- Der Druck in der ins Haus führenden Frischwasserleitung ist im allgemeinen nicht nur relativ hoch, sondern schwankt innerhalb gewisser Grenzen. Deshalb beinhalten diese Hauswasserstationen ein Druckreduzierventil, das die Aufgabe hat, den in der ins Haus führenden Frischwasserleitung herrschenden Druck auf einen vorgegebenen, meistens einstellbaren Wert herabzusetzen und auf diesem vorgegebenen Druckwert zu halten, unabhängig von Druckschwankungen in der Einlaßseite.

- Das ins Haus geleitete Frischwasser kann Schmutzteilchen enthalten, die zu einer Beeinträchtigung der Funktion der Armaturen und Apparate innerhalb des Hauses führen können. In der Hauswasserstation ist deshalb ein Filter vorgesehen, durch den das Frischwasser zunächst hindurchgeleitet wird, um zumindest die gröbsten Schmutzteilchen herauszufiltern.

Anforderungen, die an eine solche Hauswasserstation gestellt werden, sind vor allem geringe, kompakte Abmessungen, damit sie ohne Probleme auch bei beengten Verhältnissen in die ins Haus führende Frischwasserleitung, gegebenenfalls sogar nachträglich, z.B. anstelle eines üblicherweise vorhandenen Druckminderers ohne Filter, eingefügt werden kann, eine zuverlässige Funktion des Druckreduzierventils sowie, im Störungsfall, eine einfache Wartung bzw. Reparatur desselben, und schliesslich eine gute Zugänglichkeit zum Filter, da dieser von Zeit zu Zeit gereinigt werden muss.

Aus der CH-PS 581 862 ist ein Druckminderer, insbesondere für Hauswasseranlagen, bekannt geworden, der der eingangs definierten Gattung entspricht, also neben dem Druckreduzierventil ausserdem ein Filter umfasst. Zwar kann der Druckminderer gemäss der zitierten CH-PS auch relativ kompakt ausgeführt werden, jedoch wird das Druckreduzierventil vom Filter her von unten nach oben durchströmt und ist ausserdem derart im Gehäuse eingebaut, dass es nicht ohne weiteres als gesamte Einheit ausgewechselt werden kann. Die Durchströmung von unten nach oben ist ein weiterer Nachteil, der die Betriebssicherheit des Druckreduzierventils nachteilig beeinflusst, da stets Schmutzteilchen vom Filter durchgelassen werden, welche nach einer gewissen Zeit die Funktion des Druckreduzierventils beeinträchtigen. Im Störungsfall ist daher eine Reparatur oder ein Austausch des eigentlichen Druckreduzierventils nur schwierig zu bewerkstelligen.

Aus der US-A-3 695 449 ist eine Hauswasserstation bekannt, welche ebenfalls ein Filter zum Ausfiltern von Schmutzteilchen, ein von oben durchströmtes Druckreduzierventil sowie eine Ventilkammer, welche gegen den Auslass des Filters verschlossen ist, aufweist. Bei der in dieser Druckschrift beschrieben Ausführungsform durchströmt das Frischwasser den Filter von innen nach aussen. Dies hat den Nachteil, dass die Schmutzpartikel innerhalb des Filters abgelagert werden und dass daher die periodisch notwendige Reinigung dieses Filters sehr umständlich ist. Ein weiterer Nachteil liegt in der Art der Anordnung und Befestigung des Druckreduzierventils, da dieses bei der zitierten Druckschrift an der Ventilkammer innerhalb des Gehäuses befestigt ist und daher bei Bedarf nicht ohne weiteres ausgewechselt werden kann.

Es ist die Aufgabe der vorliegenden Erfindung, eine Hauswasserstation der eingangs beschriebenen Art so weiterzubilden, dass die der Verschmutzung unterliegenden Teile, unter Beibehaltung der erwünschten kompakten Abmessungen, einfacher gereinigt oder allenfalls ausgetauscht werden können.

Gemäss der Erfindung wird diese Aufgabe durch die in Kennzeichen des Patentanspruchs 1 angegebenen Merkmale gelöst. Dadurch wird erreicht, dass das Filter vom Frischwasser von aussen nach innen durchströmt wird und sich daher die Schmutzteilchen aussen am Filter in einer ringförmigen Kammer ansammeln. Ferner wird erreicht, dass das Druckreduzierventil von aussen zugänglich befestigt ist, wobei die Durchströmrichtung des Wassers durch das Druck- reduzierventil von oben nach unten beibehalten wird.

Um den Druckabfall zwischen Filterausgang und Vorkammer möglichst gering zu halten, sind vorzugsweise zwei Überströmkanäle vorgesehen.

Damit die erfindungsgemäss angestrebte, kompakte Bauform realisiert werden kann, ist es vorteilhaft, wenn die beiden Überströmkanäle kreisringsektorförmigen Querschnitt besitzen und koaxial zur Ventilkammer beidseitig des Ventilkammer-Auslaßes angeordnet sind. Dazu trägt auch die weiter vorteilhafte Massnahme bei, dass der Einlaßstutzen über einen koaxial zur Ventilkammer angeordneten Kanal mit kreisringsektorförmigem Querschnitt mit der Filterhaube verbunden ist.

Um das Druckreduzierventil als austauschbare Einheit am Gehäuse zu befestigen, ist vorgesehen, dass die Vorkammer grösseren Durchmesser besitzt als die Ventilkammer. Dadurch können die für eine einwandfreie Funktion des Druckreduzierventils erforderlichen Strömungs- und Querschnittverhältnisse geschaffen werden.

Bei dieser vorteilhaften Ausführungsform empfiehlt sich eine Ausbildung zu wählen, bei der die Druckreduzierventil-Einheit einen an einem Flansch grösseren Durchmessers angeordneten Steuerteil und einen an einem Flansch kleineren Durchmessers angeordneten Ventilteil umfasst, welche beiden Teile durch eine Spindel miteinander verbunden sind, wobei die Druckreduzierventil-Einheit mit ihrem Flansch grösseren Durchmessers die Vorkammer und mit seinem Flansch kleineren Durchmessers die Ventilkammer verschliesst. Dadurch erürbigen sich separate Bauteile zum Verschluss der beiden Kammern und die Montage im Fall einer Reparatur wird weiter erleichtert.

Im folgenden wird ein Ausführungsbeispiel der erfindungsgemässen Hauswasserstation, unter Bezugnahme auf die beiliegenden Zeichnungen, näher erläutert. In den Zeichnungen zeigen:

Fig. 1 eine teilweise geschnittene Seitenansicht der Hauswasserstation;

Fig. 2 einen Schnitt durch das Gehäuse der Hauswasserstation entlang einer ersten Vertikalebene;

Fig. 3 einen Horizontalschnitt durch das Gehäuse entlang der Linie III-III in Fig. 2; und

Fig. 4 einen Schnitt durch das Gehäuse der Hauswasserstation entlang einer zweiten, gegenüber der Darstellung in Fig. 2 um 90° gedrehten Vertikalebene.

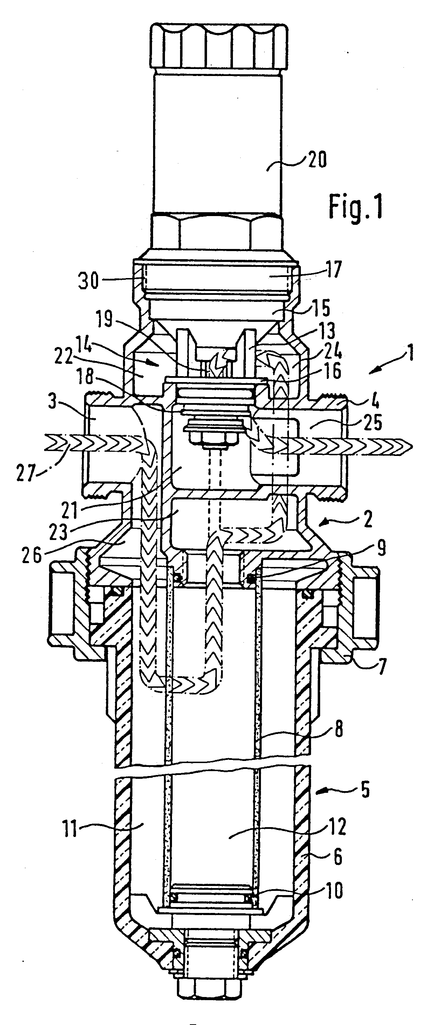

In der Fig. 1 ist eine gesamthaft mit 1 bezeichnete Hauswasserstation dargestellt, die ein generell mit 2 bezeichnetes Gehäuse umfasst, das einen Einlaßstutzen 3 und einen Auslaßstutzen 4 besitzt. Die beiden Stutzen 3 und 4 sind koaxial, im wesentlichen horizontal verlaufend angeordnet, derart, dass die Hauswasserstation 1 in eine (nicht dargestellte) Frischwasserleitung, gegebenenfalls auch nachträglich, eingefügt werden kann.

Am unteren Teil des Gehäuses 2 ist eine generell mit 5 bezeichnete Filtereinheit angebracht; diese umfasst eine lösbar am Gehäuse 2 befestigte Filterhaube 6, wobei die Befestigung zweckmässigerweise mittels einer Kragenmutter 7 erfolgen kann. Die Filterhaube 6 nimmt ein Filtersieb 8 mit geringerem Durchmesser als die Filterhaube 6 auf, wobei das Filtersieb 8 mit seinem oberen Ende, über eine Dichtung 9, mit dem Gehäuse 2 und an seinem unteren Ende, über eine Dichtung 10, mit der Filterhaube 6 verbunden ist. Dadurch wird die Filterhaube 6 in eine äussere, ringförmige Kammer 11 und in eine innere Kammer 12 unterteilt.

Das Gehäuse 2 nimmt weiter eine generell mit 14 bezeichnete Druckreduzierventil-Einheit auf, welche einen oberen, im Durchmesser grösseren Flansch 15 und einen unteren, im Durchmesser geringeren Flansch 16 aufweist. Am oberen Flansch 15 ist der Steuerteil 17 der Druckreduzierventil-Einheit und am unteren Flansch 16 der Ventilteil 18 derselben angeordnet. Die beiden Flansche 15 und 16 sind über Stege 13 und die beiden Teile 17 und 18 mittels einer Spindel 19 miteinander verbunden. Somit bildet die Druckreduzierventil-Einheit 14 ein selbständiges Bauteil in Form eines kompakten Einsatzes.

Die Funktion und der Aufbau der Druckreduzierventil-Einheit 14 ist an sich bekannt und braucht an dieser Stelle nicht weiter erläutert zu werden. Der Vollständigkeit halber sei erwähnt, dass am oberen Teil des Gehäuses 2 eine Federhaube 20 angebracht ist, welche eine bezüglich der Vorspannung einstellbare (nicht dargestellte) Feder aufnimmt, die auf dem Steuerteil 17 aufliegt.

Das Gehäuse 2 besitzt eine Ventilkammer 21, die im wesentlichen zentral im Gehäuse 2 angeordnet ist und die radial in den Auslaßstutzen 4 mündet. Gegen unten, d.h. gegen die Filtereinheit 5 hin, ist die Ventilkammer 21 verschlossen. Oben besitzt die Ventilkammer 21 eine runde Öffnung, in welche der Ventilteil 18 mit dem Flansch 16 geringeren Durchmessers dichtend eingesetzt ist. Oberhalb der Ventilkammer 21 ist eine Vorkammer 22 ausgebildet, mit einer oberen Öffnung, in welche der Steuerteil 17 der Druckreduzierventil-Einheit 14 mit seinem grösseren Flansch 15 dichtend eingesetzt ist. Die gesamte Druckreduzierventil-Einheit 14 ist mittels einer lösbaren Verbindung 30 am Gehäuse 2 befestigt.

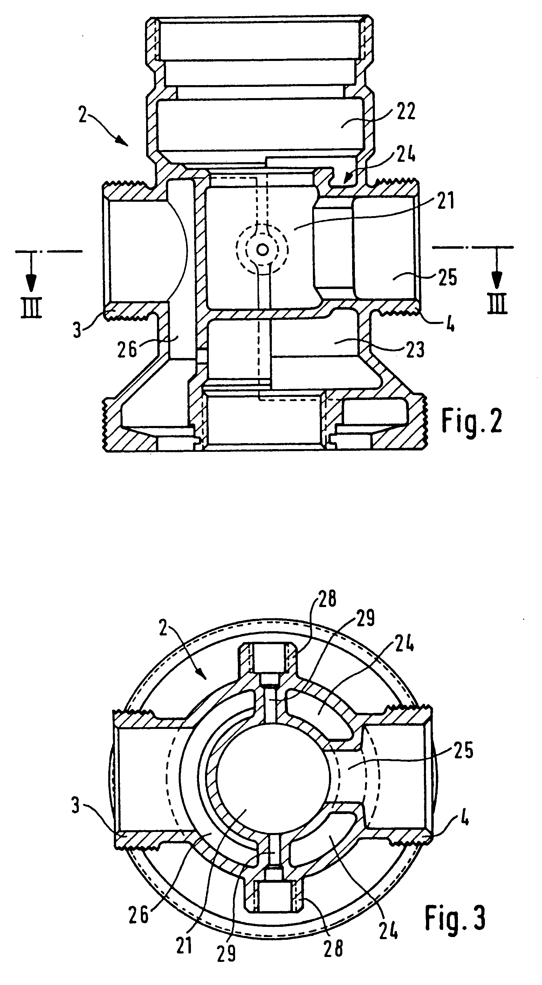

Die Kammer 12 im Inneren des Filtersiebes 8 ist an ihrer Oberseite offen und mündet in eine Sammelkammer 23, welche mittels Überströmkanälen 24 mit der Vorkammer 22 verbunden ist. Wie insbesondere aus Fig. 3 deutlich ersichtlich ist, sind zwei Überströmkanäle 24 vorhanden, die kreisringsektorförmigen Querschnitt besitzen und koaxial zur Ventilkammer 21, beidseitig des Ventilkammerauslasses 25, angeordnet sind.

Der Einlaßstutzen 3 des Gehäuses 2 ist über einen ebenfalls kreisringsektorförmigen Querschnitt besitzenden Einlasskanal 26 mit der um das Filtersieb 8 herum gebildeten Ringkammer 11 verbunden; auch der Einlasskanal 26 ist, den beiden Überströmkanälen 24 gegenüberliegend, koaxial zur Ventilkammer 21 angeordnet.

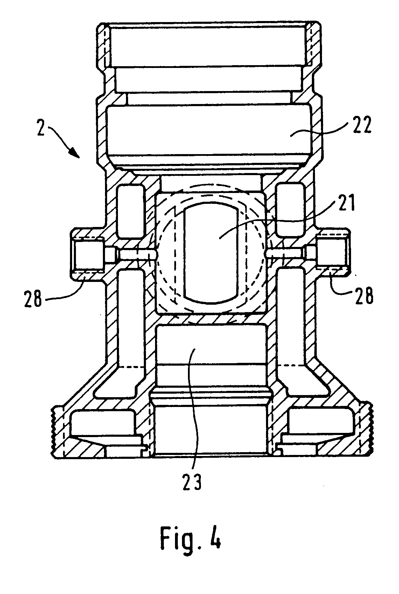

Wie insbesondere aus den Figuren 2 und 4 hervorgeht, besitzt die Ventilkammer 21 einen geringeren Querschnitt als die darüber angeordnete und mit dieser über den Ventilteil 18 der Druckreduzierventil-Einheit 14 verbundenen Vorkammer 22.

In der Fig. 1 ist die Strömungsrichtung des durch die Hauswasserstation 1 fliessenden Wassers bzw. der Strömungsverlauf schematisch durch die Pfeillinie 27 veranschaulicht. Somit tritt das Frischwasser durch den Einlaßstutzen 3 in das Gehäuse 2 der Hauswasserstation 1 ein und gelangt über den Einlasskanal 26 in die Ringkammer 11. In dieser baut sich ein gewisser Druck auf, so dass das Wasser durch das Filtersieb 8 hindurch in die innere Kammer 12 eintritt. Dabei wird es zumindest von den gröberen Schmutzteilchen befreit; diese bleiben an der Aussenfläche des Filtersiebes 8, welches selbstverständlich in bekannter Weise von Zeit zu Zeit gereinigt werden muss.

Das gereinigte Wasser strömt nun aus der inneren Kammer 12 in die Sammelkammer 23 oberhalb der Filtereinheit 5 und gelangt über die Überströmkanäle 24 in die Vorkammer 22, wo es den Steuerteil 17 der Druckreduzierventil-Einheit 14 in bekannter Weise beaufschlagt. Je nach eingestelltem Druck, der von der in der Federhaube 20 aufgenommenen Feder auf den Steuerteil 17 ausgeübt wird, öffnet der Ventilteil 18 mehr oder weniger, so dass das Wasser aus der Vorkammer 22 in die Ventilkammer 21 strömen und diese durch den Auslass 25 bzw. Auslaßstutzen 4 verlassen kann.

Durch die Massnahme, dass die Druckreduzier-Einheit 14 von oben nach unten durchströmt wird, ergibt sich eine überraschend geringe Verschmutzungsanfälligkeit des Ventilteiles 18 und damit eine ausgesprochen hohe Zuverlässigkeit der Funktion der Druckreduzierventil-Einheit 14. Durch die koaxiale Anordnung von Ventilkammer 21 einerseits und Einlasskanal 26 bzw. Überströmkanälen 24 andererseits kann eine sehr kompakte Bauweise der gesamten Hauswasserstation 1 erreicht werden. Im Störungsfall kann die als selbständiger Einsatz ausgebildete Druckreduzierventil-Einheit 14 leicht ausgebaut und gereinigt, bzw. ausgetauscht werden.

Gegebenenfalls kann das Gehäuse 2 mit Anschlußstutzen 28 versehen sein, die über einen Kanal 29 (Fig. 3) mit der Ventilkammer 21 in Verbindung stehen, um ein (nicht dargestelltes) Manometer aufzunehmen.

## Patentansprüche

1. Hauswasserstation mit einem Gehäuse (2), das einen Einlaßstutzen (3) sowie einen Auslaßstutzen (4) mit in wesentlichen koaxialer, horizontaler Anordnung besitzt und eine federbelastete Druckreduzierventil-Einheit (14) aufnimmt, und mit einem den Einlaßstutzen (3) nachgeschalteten Filter (8), das unterhalb der Druckreduzierventil-Einheit (14) in einer Filterhaube (6) angeordnet ist, wobei das Filter (8) einen geringeren Durchmesser als die Filterhaube (6) aufweist, sodass eine ringförmige Kammer (11) gebildet ist, wobei das Gehäuse (2) eine gegen den Auslass des Filters (8) hin verschlossene Ventilkammer (21) aufweist, die in den Auslass (4) mündet, und wobei eine oberhalb der Ventilkammer (21) angeordnete Vorkammer (22) vorgesehen ist, welche über mindestens einen Überströmkanal (24) mit dem Auslass des Filters (8) verbunden ist, dadurch gekennzeichnet, dass die Druckreduzierventil-Einheit (14) mittels einer von aussen lösbaren Verbindung (30) am Gehäuse (2) befestigt ist, und dass der Einlaßstutzen (3) über einen, koaxial zur Ventilkammer angeordneten, Kanal (26) direkt in die, durch das Filter (8) und die Filterhaube (6) gebildete, ringförmige Kammer (11) mündet.

2. Hauswasserstation nach Patentanspruch 1, dadurch gekennzeichnet, dass die Druckreduzierventil-Einheit (14) mittels einer Schraubverbindung am Gehäuse (2) befestigt ist.

3. Hauswasserstation nach Patentanspruch 1, dadurch gekennzeichnet, dass die Filterhaube (6), zwecks Reinigung des Filters, auswechselbar am Gehäuse (2) befestigt ist.

4. Hauswasserstation nach Patentanspruch 1, dadurch gekennzeichnet, dass zwei Überströmkanäle (24) mit kreisringsektorförmigem Querschnitt vorgesehen sind, welche koaxial zur Ventilkammer (21) beidseitig des Ventilkammer-Auslaßes (25) angeordnet sind.

5. Hauswasserstation nach Patentanspruch 1, dadurch gekennzeichnet, dass der koaxial zur Ventilkammer (21) angeordnete Kanal (26) einen kreisringsektorförmigen Querschnitt aufweist.

6. Hauswasserstation nach einem der vorangehenden Patentansprüche, dadurch gekennzeichnet, dass die Vorkammer (22) grösseren Durchmesser besitzt als die Ventilkammer (21).

7. Hauswasserstation nach einem der vorangehenden Patentansprüche, dadurch gekennzeichnet, dass die Druckreduzierventil-Einheit (14) ein in das Gehäuse (2) eingelegtes Druckreduzierventil aufweist.

8. Hauswasserstation nach Patentanspruch 7, dadurch gekennzeichnet, dass die Druckreduzierventil-Einheit (14) einen an einen Flansch (15) grösseren Durchmessers angeordneten Steuerteil (17) und einen an einen Flansch (16) kleineren Durchmessers angeordneten Ventilteil (18) umfasst, welche beiden Teile (17, 18) durch eine Spindel (19) miteinander verbunden sind.

9. Hauswasserstation nach Patentanspruch 8, dadurch gekennzeichnet, dass die Druckreduzierventil-Einheit (14) mit ihrem Flansch (15) grösseren Durchmessers die Vorkammer (22) und mit ihrem Flansch (16) kleineren Durchmessers die Ventilkammer (21) verschliesst.

10. Hauswasserstation nach Patentanspruch 8, dadurch gekennzeichnet, dass die Druckreduzierventil-Einheit (14) so angeordnet ist, dass das Frischwasser die Druckreduzierventil-Einheit (14) von oben nach unten durchströmt.

## Claims

1. Domestic water station with a casing (2), which comprises an inlet connection (3) and an outlet connection (4) with a substantially coaxial, horizontal arrangement and receives a spring-loaded pressure relief valve unit (14) and with a filter (8) on the downstream side of the inlet connection (3), which filter is located below the pressure relief valve unit (14) in a filter hood (6), the filter (8) having a smaller diameter than the filter hood (6), so that an annular chamber (11) is formed, the casing (2) comprising a valve chamber (21) closed towards the outlet of the filter (8), which valve chamber (21) opens into the outlet (4) and a preliminary chamber (22) located above the valve chamber (21) being provided, which is connected by way of at least one overflow channel (24) to the outlet of the filter (8), characterised in that the pressure relief valve unit (14) is attached to the casing (2) by means of a connection (30) which is releasable from outside, and that the inlet connection (3) opens by way of a channel (26), located coaxially with respect to the valve chamber, directly into the annular chamber (11) formed by the filter (8) and the filter hood (6).

2. Domestic water station according to Patent Claim 1, characterised in that the pressure relief valve unit (14) is attached to the casing (2) by means of a screw connection.

3. Domestic water station according to Patent Claim 1, characterised in that for the purpose of cleaning the filter, the filter hood (6) is exchangeably attached to the casing (2).

4. Domestic water station according to Patent Claim 1, characterised in that two overflow channels (24) with a cross-section in the shape of a sector of a circular ring are provided, which are arranged coaxially with respect to the valve chamber (21) on both sides of the valve chamber outlet (25).

5. Domestic water station according to Patent Claim 1, characterised in that the channel (26) arranged coaxially with respect to the valve chamber (21) has a cross-section in the shape of a sector of a circular ring.

6. Domestic water station according to one of the preceding Patent Claims, characterised in that the preliminary chamber (22) has a greater diameter than the valve chamber (21).

7. Domestic water station according to one of the preceding Patent Claims, characterised in that the pressure relief valve unit (14) has a pressure relief valve inserted in the casing (2).

8. Domestic water station according to Patent Claim 7, characterised in that the pressure relief valve unit (14) has a control part (17) located on a flange (15) of larger diameter and a valve part (18) located on a flange (16) of smaller diameter, which two parts (17, 18) are connected to each other by a spindle (19).

9. Domestic water station according to Patent Claim 8, characterised in that the pressure relief valve unit (14) closes off the preliminary chamber (22) by its flange (15) of larger diameter and closes off the valve chamber (21) by its flange (16) of smaller diameter.

10. Domestic water station according to Patent Claim 8, characterised in that the pressure relief valve unit (14) is arranged so that the fresh water flows through the pressure relief valve unit (14) from the top in a downwards direction.

## Revendications

1. Station d'eau domestique, comportant une enveloppe (2), laquelle possède une tubulure d'admission (3) ainsi qu'une tubulure de sortie (4) ayant une disposition horizontale essentiellement coaxiale, et qui loge un ensemble détendeur (14) monté sur ressort, et comportant un filtre (8) en aval de la tubulure d'admission (3) et disposé en-dessous de l'ensemble détendeur (14) dans un capot de filtre (6), le filtre (8) ayant un diamètre inférieur à celui du capot de filtre (6), de façon à former une chambre annulaire (11), l'enveloppe (2) présentant une chambre de soupape fermée contre l'orifice de sortie du filtre (8),chambre de soupape qui débouche dans l'orifice de sortie (4), tandis qu'est prévue une pré-chambre (2), disposée au-dessus de la chambre de soupape (21), et qui, par l'intermédiaire d'un passage de trop-plein (24), est reliée à la sortie du filtre (8), caractérisée en ce que l'ensemble détendeur (14) est fixé à l'enveloppe (2) au moyen d'un assemblage (30) amovible de l'extérieur, et que la tubulure d'admission (3) débouche directement, par l'intermédiaire d'un passage (26) disposé coaxialement à la chambre de soupape, dans la chambre annulaire forme par le filtre (8) et le capot de filtre (6).

2. Station d'eau domestique selon la revendication 1, caractérisée en ce que l'ensemble détendeur (14) est fixé à l'enveloppe (12) à l'aide d'un assemblage vissé.

3. Station d'eau domestique selon la revendication 1, caractérisée en ce que le capot de filtre (6) est, pour faciliter le nettoyage du filtre, fixé à l'enveloppe (2) de façon à pouvoir être remplacé.

4. Station d'eau domestique selon la revendication 1, caractérisée en ce qu'on prévoit deux passages de trop-plein (24) ayant une section transversale en forme de secteur circulaire, et qui sont disposés coaxialement à la chambre de soupape (21), des deux côtés de l'orifice de sortie (25) de la chambre de soupape.

5. Station d'eau domestique selon la revendication 1, caractérisée en ce que le passage (26) disposé coaxialement à la chambre de soupape (21) a une section transversale en forme de secteur circulaire.

6. Station d'eau domestique selon l'une des revendications précédentes, caractérisée en ce que la pré-chambre (22) a un diamètre supérieur à celui de la chambre de soupape (21).

7. Station d'eau domestique selon l'une des revendications précédentes, caractérisée en ce que l'ensemble détendeur (14) comporte un détendeur inséré dans l'enveloppe (2).

8. Station d'eau domestique selon la revendication 7, caractérisée en ce que l'ensemble détendeur (14) comporte un élément de commande (17), disposé contre une bride (15) de grand diamètre, et un élément de soupape (18), disposé contre une bride (16) de faible diamètre, ces deux éléments (17, 18) étant reliés l'un à l'autre par une broche (19).

9. Station d'eau domestique selon la revendication 8, caractérisée en ce que l'ensemble détendeur (14) obture la pré-chambre (22) par sa bride (15) de grand diamètre et la chambre de soupape (21) par sa bride (16) de faible diamètre.

10. Station d'eau domestique selon la revendication 8, caractérisée en ce que l'ensemble détendeur (14) est disposé de façon que l'eau fraîche traverse de haut en bas l'ensemble détendeur (14).

Fig.1

Fig.2

Fig.3

EP 0 337 936 B1

Fig. 4

9